Europäisches Patentamt

(19) European Patent Office

Office européen des brevets

(11) Publication number: **0 045 540**

**A1**

(12) **EUROPEAN PATENT APPLICATION**

(21) Application number: **81200812.6**

(22) Date of filing: **15.07.81**

(51) Int. Cl.³: **B 65 G 39/16**
**B 65 H 23/02**

(30) Priority: **05.08.80 NL 8004446**

(43) Date of publication of application:
**10.02.82 Bulletin 82/6**

(84) Designated Contracting States:
**AT BE CH DE FR GB IT LI LU NL SE**

(71) Applicant: **B.V. Machinefabriek v/h Pannevis & Zn.**
**Elektronweg 24**
**NL-3542 AC Utrecht(NL)**

(72) Inventor: **Wedman, Henk**
**Want 40**
**Huizen(NL)**

(74) Representative: **Noz, Franciscus Xaverius, Ir. et al,**
**Boschdijk 155 P.O. Box 645**
**NL-5600 AP Eindhoven(NL)**

(54) Device for influencing stretching and direction of displacement of a belt moving in its direction of the length during operation.

㊄ Device for influencing stretching and direction of displacement of a belt moving in its direction of the length during operation.

A device for influencing stretching and direction of displacement of a belt moving in its direction of length during operation, comprising at least one set of rollers, one of which extends above and the other below the belt, at least one of them being displaceable with respect to the belt under the action of signals derived from the stretch and the direction of displacement of the belt, whilst viewed in the direction of displacement of the belt the two rollers of said set are located one behind the other, and at least one set of rollers is arranged on both sides of the belt in a manner such that between each set of rollers a peripheral part of the belt moves along an S-shaped bend.

Fig.7

Croydon Printing Company Ltd.

0045540

-1-

Device for influencing stretching and direction of displacement of a
belt moving in its direction of length during operation.

The invention relates to a device for influencing stretching
and direction of displacement of a belt moving in its direction of length
during operation and provided with at least one set of rollers, one of
which extends above and the other below the belt and at least one of which
is displaceable with respect to the belt under the action of signals
derived from stretching and direction of displacement of the belt, whilst
viewed in the direction of displacement of the belt the two rollers of
said set are located one behind the other.

From German Patent Applications 1,481,178, 1,625,148 and
2,501,489, laid out for public inspection such devices are known for
influencing the direction of displacement of a belt moving in its direction of length during operation, the rollers covering the whole width of
the belt and being supported on both sides of said belt. With the aid of
this known device the direction of displacement of the belt can be acted
upon during operation. However, when belt-shaped materials of, for
example, cloth or tissue, such as endless filter belts, endless coveyor
belts and the like are guided along rollers or other supports, folds of
the belt material are frequently formed. Such folds are generally not permitted for the desired optimum operation of the belt but such folds cannot be avoided when the aforesaid, known constructions are employed.

Besides, from German Patent 2,304,379 a device is known which comprises sets of rollers disposed so that the rotary axes of the rollers on one set are located in a plane at least substantially at right angles to the belt material, whilst the belt can be pinced between the two rollers. The rotary axes of the rollers are at an angle differing from $90^{\circ}$ to the direction of length of the belt.

During operation the belt is clamped in between the rollers with a force depending on the stretch and/or the direction of displacement of the belt.

If, for example, a belt tends to deflect to a given side, a signal derived from the displacement of the belt will cause a decrease in clamping force exerted by the set of rollers on the side concerned and increase in clamping force of the set of rollers located on the opposite side of the belt so that the latter set of rollers will draw the belt back into the intended path of the belt. With the aforesaid inclined disposition of the rollers they can at the same time exert a spreading effect on the belt for eliminating any folds formed in the belt.

A disadvantage of the use of such pincing rollers is that fairly high local loads may occur in the belt, particularly when the edge of the belt is not completely flat, but provided, for example, with a turn-over. Particularly in the case of a belt having a turn-over thickness differences occur across the direction of length of the belt so that irregular local wear of the pincing rollers and/or of the rim of the belt itself is involved.

Viewed in the direction of length of the belt such pincing rollers also produce a locally heavy load, which give rise to disengagement of the rim, ravelling of the cloth and even to tear of the cloth in the longitudinal direction.

A further disadvantage is that in eliminating lateral movements of the belt the pincing force of the rollers arranged on both sides of the belt is frequently fully suppressed so that locally no tractive force is any longer exerted on the belt, which may give rise to the formation of folds.

The invention has for its object to provide a device of the kind set forth by which the disadvantages inherent in the conventional devices can be obviated in a simple manner.

According to the invention this can be achieved by arranging on both sides of the belt at least one set of rollers so that between each set of rollers a peripheral part of the belt will move along an S-shaped bend.

By using the construction embodying the invention two sets of rollers engaging only the peripheral part of the belt permit of steering the belt path as well as avoiding or removing folds of the belt material without the need for exerting locally particularly heavy pincing forces on the belt. The construction of the device can thus be simple and since undesirable load of the belt material is avoided, a long lifetime of the belt is ensured.

In a preferred embodiment of the invention the two sets of rollers are pivotable about an axis or axes extending at least substantially at right angles to the main surface of the belt. By using this construction the device has a particularly simple structure in which the two sets of rollers can be intercoupled so that they can be commonly adjusted by a single adjusting member.

The invention will be described more fully hereinafter with reference to a few embodiments schematically shown in the accompanying Figures for the construction in accordance with the invention.

Fig. 1 is a schematic plan view of part of a belt with two rollers acting on said belt.

Fig. 2 is a side elevation of the belt of Fig. 1 in a first position of the rollers.

Fig. 3 is a side elevation of the belt of Fig. 1 in a second position of the rollers.

Fig. 4 is a schematic sectional view of an embodiment of a roller.

Fig. 5 schematically illustrates a potential support for two mutually co-operating rollers.

Fig. 6 shows a second embodiment of a support for two mutually co-operating rollers.

Fig. 7 shows the rollers of Fig. 6 in a position turned through about 180°.

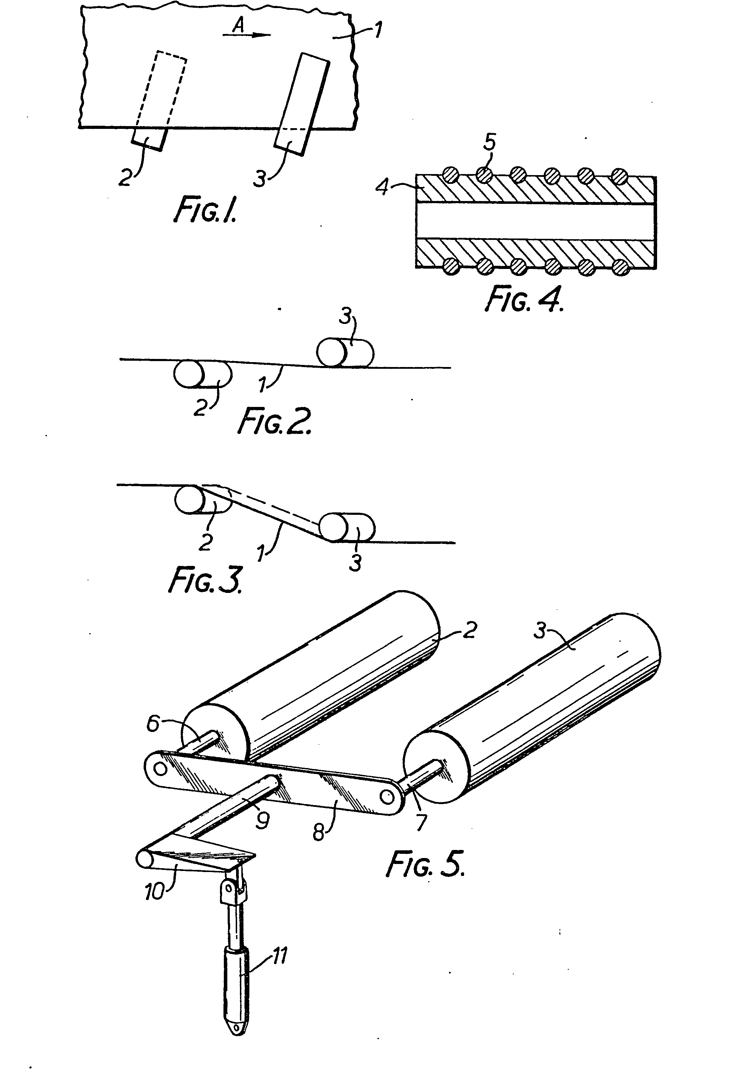

Fig. 1 schematically shows part of a belt 1, for example, a filter belt or endless conveyor belt guided along guide members (not shown in detail) such as rollers, drums or the like and being displaced in its direction of length indicated by the arrow A during operation. Near a side edge of the belt 1 two rollers 2 and 3 are arranged at a given distance from one another, viewed in the direction of displacement of the belt indicated by the arrow A. The roller 2 is disposed below and the roller 3 above the belt. Preferably a similar pair of rollers is provided on the other side of the belt. From the figures it will furthermore be apparent that in the embodiment shown the rotary axis or axes of the roller(s) is (are) not at right angles to the direction of length of the belt, they are rather at an angle differing from $90^{o}$ to the longutidinal direction of the belt in a manner such, viewed in the direction of displacement of the belt, the end of the roller nearest the centre of the belt is located in fromt of the parts of the rollers near the side of the belt. During operation the rollers 2 and 3 are pressed with the aid of members not shown in detail in Figs. 1 to 3 against the belt surface so that the belt is guided to some extent through an S-shaped bend. By their frictional contact with the belt the rollers will exert a slightly outwardly directed force on the belt so that on the one hand the tendency of the belt to form folds is counteracted, since the rollers located on both sides of the belt tend to stretch the belt, and on the other hand the belt can be steered in a transverse direction by affecting the magnitude of the force so that it is heavier near one side of the belt than near the other. In order to raise the force exerted on the belt one of the two rollers 2 and 3 or both rollers 2, 3 can be displaced in a direction of height i.e. transversely of the plane of the belt, for example, out of the position shown in Fig. 2 to the position shown in Fig. 3, where the S-shaped bend of the belt is sharpened and the arc subtended by the belt on the roller is larger.

The signals required for the displacement of the roller 2 and/or of the roller 3 can again be derived from the stretch and/or the direction of displacement of the belt 1 itself with the aid of members known per se.

Since the rollers 2 and 3 mutually co-operating for steering the belt are spaced apart by a given distance, the forces exerted on the belt for controlling the course of the belt, as compared with the constructions hitherto known, will attack a comparatively great length of the belt, whilst compression of the belt between relatively co-operating rollers is avoided, which will considerably enhance the lifetime of the belt.

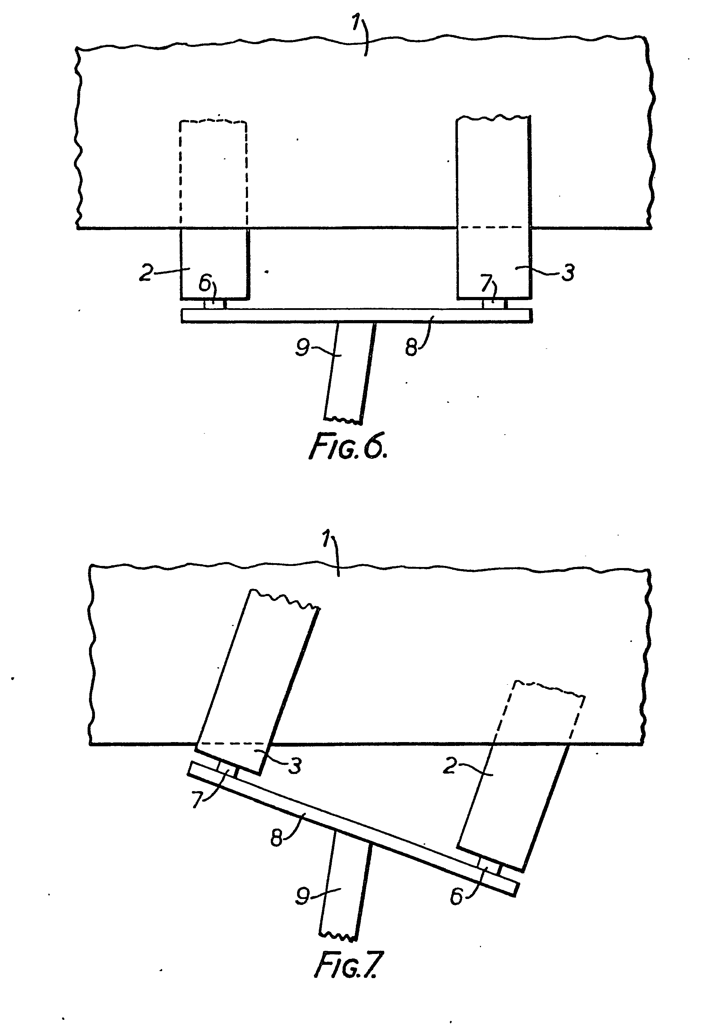

An efficaceuous embodiment of a roller is shown in Fig. 4. This Figure shows that a roller may comprise a cylindrical body 4 having

grooves receiving O-rings 5 of rubber or a similar material so that these rings 5 extend beyond the outer surface of the cylindrical body 4. It is efficient to make the cylindrical body 4 from a synthetic resin, for example, polyethylene, polyamide or polypropylene. It is found that the O-rings effectively co-operate with the belt to be acted upon.

Fig. 5 shows an effective embodiment of the support of two relatively co-operating rollers 2 and 3. It is shown in this Figure that the two rollers 2 and 3 are freely rotatable on shafts 6 and 7 respectively and arranged on a yoke 8. To the yoke 8 is fastened a shaft 9 extending parallel to the shafts 6 and 7 and being rotatably journalled about its centre line in a frame part (not shown) of the device, part of which is formed by the belt to be acted upon. To the end of the shaft 9 remote from the yoke 8 is fastened an arm 10, the free end of which is engaged by a setting cylinder 11. The setting cylinder 11 can be actuated during operation by the signals derived from the stretch and/or direction of displacement of the belt in order to turn the yoke 8 about the centre line of the shaft 9 with the rollers 2 and 3 supported by the yoke 8.

Fig. 6 and 7 shows a further embodiment of a device in accordance with the invention. Those parts which correspond with those of the embodiment described above are designated by the same reference numerals as in said embodiment.

From Figs. 6 and 7 it will be apparent that the shaft 9 is not parallel to the rotary axes of the rollers 2 and 3: it is at an angle to said rotary axes. The structure may be such that in the position shown in Fig. 6 the centre lines of the shafst or rollers 2 and 3 are at angles to the longitudinal axis of the belt 1 or exhibit a slight discrepancy from this perpendicular position to the belt 1. When the yoke 8 is then turned through 180°, the centre lines of the rollers 2 and 3, as will be apparent from Fig. 7, will be at a considerably larger angle to a line perpendicular to the direction of length of the belt so that the steering force exerted transversely of the direction of length of the belt in the position of the rollers shown in Fig. 7 may appreciably exceed that exerted in the position of the rollers shown in Fig. 6, whereas nevertheless in both positions the belt is guided through an S-shaped bend along the rollers.

It will be obvious that within the spirit and scope of the invention many variants of the embodiments described above and schematically shown in the accompanying Figures are possible.

For example, instead of disposing the two rollers 2 and 3 so as to be rotatable about a shaft parallel to said rollers, the rollers may be arranged so that they are adjustable about a pivotal axis being at an acute angle or at right angles to the plane going through the rotary axes of the two rollers 2 and 3. It may furthermore be imagined to render the rollers 2 and 3 adjustable, for example, about two crossing or intersecting axes, one of which may or may not be parallel to the two rotary axes of the rollers 2 and 3. This provides many possibilities of disposing the rotary axes of the . rollers 2 and 3 with respect to the longitudinal axis of the belt and of controlling the extent to which the belt is urged into an S-shaped bend by the mutually co-operation rollers.

Furthermore the common adjustability of the mutually co-operating rollers 2 and 3 may be replaced by a relatively independent disposition so that they will be adjustable independently of one another. A further possibility resides in that one of the rollers is arranged in a fixed position, whereas the other roller alone is adjustable.

Although it will in general be preferred fot the rollers 2 and 3 to extend parallel to one another, they may be arranged at a small angle, of, for example 5 to 10$^{\circ}$ to one another.

As a further alternative more than two rollers may be used in each set, at least one roller of a set being movable, whereas the belt zigzags along the rollers.

Moreover, viewed in the direction of width of the belt more than two sets of rollers may be arranged one behind the other, some of which engage the peripheral parts of the belt, whereas others are disposed further to the centre of the belt. Preferably at least two sets of rollers of this plurality of sets will be commonly or individually pivotable. This has the advantage that the steering and tractive efforts are better distributed across the belt.

Furthermore, all rollers may be suspended in a single frame, which is pivotable about an axis at least substantially perpendicular to the direction of the belt.

-7-

## CLAIMS

1.      A device for influencing stretching and direction of displacement of a belt moving in its direction of length during operation, comprising at least one set of rollers, one of which extends above and the other below the belt, at least one of them being displaceable with respect to the belt under the action of signals derived from the stretch and the direction of displacement of the belt, whilst viewed in the direction of displacement of the belt the two rollers of said set are located one behind the other, characterized in that at least one set of rollers is arranged on both sides of the belt in a manner such that between each set of rollers a peripheral part of the belt moves along an S-shaped bend.

2.      A device as claimed in Claim 1 characterized in that the roller is adjustable transversely of the plane of the belt.

3.      A device as claimed in Claim 1 or 2 characterized in that the angle between the centre line of a roller and the direction of length of the belt is adjustable.

4.      A device as claimed in anyone of the preceding Claims characterized in that a roller is pivotable about a pivotal axis extending at least substantially parallel to the surface of the belt or in line with said surface.

5. A device as claimed in anyone of the preceding Claims 1 to 3 characterized in that a roller is pivotable about an axis crossing the centre line of the roller.

6. A device as claimed in Claim 5 characterized in that the two rollers are each pivotable about an axis at least substantially perpendicular to the main surface of the belt.

7. A device as claimed in anyone of the preceding Claims characterized in that a set of rollers is supported by a pivorable yoke.

8. A device as claimed in Claim 7 characterized in that the yoke is rotatable about a pivotal shaft located between the rotary axes of the two rollers.

9. A device as claimed in Claim 7 or 8 characticed in that the pivotal shaft is at an angle to the rotary axes of the rollers.

10. A device as claimed in anyone of the prededing Claims 7 to 9 characterized in that the yoke is pivotable through an angle of at least substantially 180$^O$.

11. A device as claimed in anyone of the preceding Claims characterized in that a plurality of relatively spaced O-rings of rubber or a similar material are arranged on the outer periphery of a roller.

*Fig. 1.*

*Fig. 4.*

*Fig. 2.*

*Fig. 3.*

*Fig. 5.*

_Fig.6._

_Fig.7._

0045540

European Patent Office

EUROPEAN SEARCH REPORT

Application number

EP 81 20 0812

## DOCUMENTS CONSIDERED TO BE RELEVANT

| Category | Citation of document with indication, where appropriate, of relevant passages | Relevant to claim |
|---|---|---|
| X | <u>GB - A - 973 548</u> (INDUSTRIAL OVENS) <br> * Page 2, lines 5-130; page 3, lines 1-26; figures 1-10 * | 1-4 |

---

CLASSIFICATION OF THE APPLICATION (Int. Cl.³)

B 65 G 39/16
B 65 H 23/02

TECHNICAL FIELDS SEARCHED (Int. Cl.³)

B 65 G
B 65 H
B 01 D

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05-11-1981 | OSTIJN |

EPO Form 1503.1 06.78